# EUROPEAN PATENT APPLICATION

(11) **EP 2 650 803 A1**
(43) Date of publication of application: **16.10.2013**
(21) Application number: 12820209.0
(22) Date of filing: 27.02.2012
(51) Int. Cl.: G06F 17/30, G06Q 50/12

(54) **DEVICE FOR PROVIDING INFORMATION, METHOD FOR PROVIDING INFORMATION, PROGRAM FOR PROVIDING INFORMATION, AND COMPUTER-READABLE RECORDING MEDIUM STORING PROGRAM FOR SAME**

(30) Priority: 29.07.2011 JP 2011167305
(71) Applicant: Rakuten, Inc., Tokyo 140-0002 (JP)
(72) Inventor: KATAGIRI Yoko, Tokyo 140-0002 (JP)
(74) Representative: HOFFMANN EITLE
(86) International application number: PCT/JP2012/054829
(87) International publication number: WO 2013/018392

(57) **Abstract**

An information providing device (50) includes a query extraction unit (51) that, based on query information including a first search condition corresponding to facility attributes and a second search condition corresponding to additional attributes used in a user's search of facilities and attribute information in a facility database (31), extracts the query information where the first search condition matches the facility attributes of a target facility and the second search condition does not match the additional attributes of the target facility, a recommendation information generation unit (52) that generates recommendation information related to the additional attributes based on the extracted query information, and a transmitting unit (53) that presents the recommendation information to the target facility.

## Description

### Technical Field

One embodiment of the present invention relates to an information providing device that provides useful information to facilities which invite users, an information providing method, an information providing program, and a computer-readable recording medium storing the program.

### Background Art

Various facility reservation systems have been known. For example, a reservation system that accepts reservations for hotel and rental car plans is disclosed in the following Patent Literature 1. In such a reservation system, prepared plans are presented to users, and the users order a desired plan in view of those plans.

### Citation List

### Patent Literature

PTL 1: Japanese Unexamined Patent Application Publication No. 2008-192088

### Summary of Invention

### Technical Problem

The plans that are offered to users are created by a preparer who analyzes the reservation records, access records and the like of the plans offered currently or the plans offered in the past and estimates the future demand. Accordingly, the creation of plans depends on the experience and skills of the preparer. There is thus a possibility that plans that do not meet the needs of users are created and, as a result, facilities miss sales opportunities. It is therefore demanded to provide information for understanding the needs of users to facilities.

### Solution to Problem

An information providing device according to one embodiment of the present invention is an information providing device capable of accessing a facility storage unit that stores attribute information indicating facility attributes and additional attributes of facilities, the device including an extraction unit that, based on query information including a first search condition corresponding to the facility attributes and a second search condition corresponding to the additional attributes used in a user's search of facilities and the attribute information, extracts the query information where the first search condition matches the facility attributes of a target facility and the second search condition does not match the additional attributes of the target facility, a generation unit that generates recommendation information related to the additional attributes based on the query information extracted by the extraction unit, and a presentation unit that presents the recommendation information to the target facility.

An information providing method according to one embodiment of the present invention is an information providing method executed by an information providing device capable of accessing a facility storage unit that stores attribute information indicating facility attributes and additional attributes of facilities, the method including an extraction step of, based on query information including a first search condition corresponding to the facility attributes and a second search condition corresponding to the additional attributes used in a user's search of facilities and the attribute information, extracting the query information where the first search condition matches the facility attributes of a target facility and the second search condition does not match the additional attributes of the target facility, a generation step of generating recommendation information related to the additional attributes based on the query information extracted in the extraction step, and a presentation step of presenting the recommendation information to the target facility.

An information providing program according to one embodiment of the present invention is an information providing program causing a computer to function as an information providing device capable of accessing a facility storage unit that stores attribute information indicating facility attributes and additional attributes of facilities, the program causing the computer to implement an extraction unit that, based on query information including a first search condition corresponding to the facility attributes and a second search condition corresponding to the additional attributes used in a user's search of facilities and the attribute information, extracts the query information where the first search condition matches the facility attributes of a target facility and the second search condition does not match the additional attributes of the target facility, a generation unit that generates recommendation information related to the additional attributes based on the query information extracted by the extraction unit, and a presentation unit that presents the recommendation information to the target facility.

A computer-readable recording medium according to one embodiment of the present invention is a computer-readable recording medium storing an information providing program causing a computer to function as an information providing device capable of accessing a facility storage unit that stores attribute information indicating facility attributes and additional attributes of facilities, the information providing program causing the computer to implement an extraction unit that, based on query information including a first search condition corresponding to the facility attributes and a second search condition corresponding to the additional attributes used in a user's search of facilities and the attribute information, extracts the query information where the first search condition matches the facility attributes of a target facility and the second search condition does not match the additional attributes of the target facility, a generation unit that generates recommendation information related to the additional attributes based on the query information extracted by the extraction unit, and a presentation unit that presents the recommendation information to the target facility.

According to the above-described embodiments, the query information where the facility attributes of a facility match a user's search condition but the additional attributes of the facility do not match the search condition is extracted. This means that the query information where a part of the facility attributes meets the user's needs but another part of the facility attributes does not meet the user's needs is extracted. There is thus a possibility that the user's needs are met if only the additional attributes are changed. Therefore, by generating the recommendation information related to the facility attributes that do not match the search condition based on such query information and presenting it to the target facility, the target facility can understand the user's needs.

In the information providing device according to yet another embodiment, the query information may further include information indicating a date of use, and the extraction unit may extract the query information where the first search condition matches the facility attributes of a target facility, the second search condition does not match the additional attributes of the target facility, and the date of use is included in available dates of the target facility.

In the information providing device according to yet another embodiment, the query information may further include information indicating one or more prices, and the extraction unit may extract the query information where the first search condition matches the facility attributes of a target facility, the second search condition does not match the additional attributes of the target facility, and an offered price of the target facility is included in the one or more prices.

In the information providing device according to another embodiment, the query information may be stored in a query storage unit accessible from the information providing device, and the extraction unit may extract, from the query storage unit, the query information where the first search condition matches the facility attributes of a target facility, the second search condition does not match the additional attributes of the target facility, and the number of times searched corresponding to a combination of the first and second search conditions is equal to or larger than a specified threshold. In this case, it is possible to provide the recommendation information indicating the additional attributes for which the users' needs are likely to be strong to facilities.

In the information providing device according to yet another embodiment, the query information may be stored in a query storage unit accessible from the information providing device, and the extraction unit may extract, from the query storage unit, the query information where the first search condition matches the facility attributes of a target facility, the second search condition does not match the additional attributes of the target facility, and a conversion rate corresponding to a combination of the first and second search conditions is equal to or larger than a specified threshold. In this case, it is possible to provide the recommendation information indicating the additional attributes for which the users' needs are likely to be strong to facilities.

In the information providing device according to yet another embodiment, the query information may be stored in a query storage unit accessible from the information providing device, and the extraction unit may extract, from the query storage unit, the query information where the first search condition matches the facility attributes of a target facility, the second search condition does not match the additional attributes of the target facility, and the number of search hits corresponding to a combination of the first and second search conditions is equal to or smaller than a specified threshold. In this case, it is possible to provide the recommendation information which is not likely to compete with the other facilities to facilities.

In the information providing device according to yet another embodiment, the facility attributes may be attributes related to features or environments of facilities, and the additional attributes may be attributes related to plans of facilities.

### Advantageous Effects of Invention

According to one aspect of the present invention, it is possible to provide information for understanding the needs of users to facilities.

### Brief Description of Drawings

Fig. 1 is a diagram showing an overall configuration of an accommodation reservation system according to an embodiment.
Fig. 2 is a diagram showing an example of facility information and plan information.
Fig. 3 is a diagram showing an example of raw data of search conditions.
Fig. 4 is a diagram showing an example of query information.
Fig. 5 is a diagram showing a hardware configuration of an information providing device shown in Fig. 1.
Fig. 6 is a diagram showing a functional configuration of the information providing device shown in Fig. 1.
Fig. 7 is a diagram showing an example of extraction of query information.
Fig. 8 is a flowchart showing an operation of the information providing device shown in Fig. 1.
Fig. 9 is a diagram showing a configuration of an information providing program according to an embodiment.

### Description of Embodiments

An embodiment of the present invention is described hereinafter in detail with reference to the appended drawings. In the description of the drawings, the same or equivalent elements are denoted by the same reference symbols, and the redundant explanation thereof is omitted.

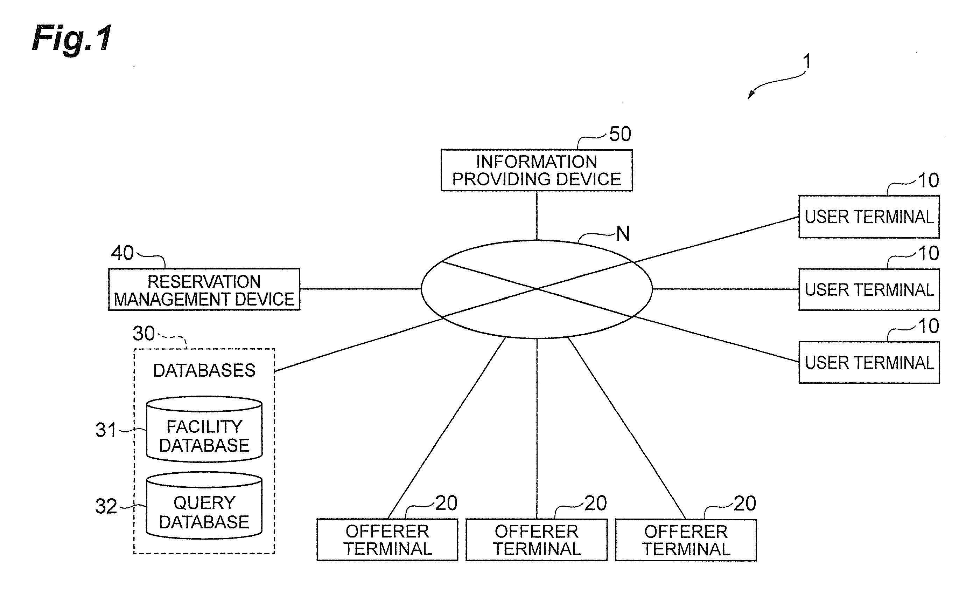

The functions and configuration of an accommodation reservation system 1 according to this embodiment are described firstly with reference to Figs. 1 to 7. The accommodation reservation system 1 is a computer system that offers a website (accommodation reservation site) that accepts reservations for accommodation facilities to users. As shown in Fig. 1, the accommodation reservation system 1 includes user terminals 10, offerer terminals 20 installed in accommodation facilities such as hotels and inns, databases 30, a reservation management device 40, and an information providing device 50. The user terminals 10, the offerer terminals 20, the databases 30, the reservation management device 40 and the information providing device 50 can communicate with one another through a communication network N, which is the Internet, a wireless LAN, a mobile communication network or the like. Although three user terminals 10 and three offerer terminals 20 are shown in Fig. 1, the number of those devices in the accommodation reservation system 1 is arbitrary.

The user terminals 10 are terminals owned by users who make reservations for a room. Examples of the user terminals 10 include advanced mobile phones (smart phones), personal digital assistants (PDA), personal computers (PC) and the like, though the variety of the mobile terminals is not limited thereto. A user can access the accommodation reservation site by operating the user terminal 10 and search accommodation facilities or accommodation plans and make reservations for the accommodation facility or accommodation plan found by the search. It is noted that the plan is a package item related to usage of facilities.

The offerer terminals 20 are terminals of accommodation facilities that offer rooms and accommodation plans for which reservations are to be made in the accommodation reservation system 1. An example of the offerer terminals 20 is a PC; however, various types of mobile terminals can be also used as the offerer terminals 20. An administrator of accommodation facilities can store facility information about facilities and plan information about accommodation plans into a facility database 31 by operating the offerer terminal 20. Further, the offerer terminals 20 can acquire recommendation information to be referred to when creating accommodation plans from the information providing device 50. The facility information, the plan information and the recommendation information are described later.

The databases 30 are a means of storing various information that are used in the accommodation reservation system 1. The databases 30 include a facility database (facility storage unit) 31 and a query database (query storage unit) 32.

The facility database 31 is a means of storing two kinds of information related to accommodation facilities: facility information and plan information. The facility information and the plan information are attribute information that are stored into the facility database 31 by the offerer terminals 20.

The facility information is information indicating the places and features of accommodation facilities, and it is, stated differently, information related to hardware attributes (facility attributes) that are not easily changeable. Examples of the facility information include the locations of accommodation facilities, the presence or absence of hot springs, the presence or absence of various features such as open-air baths, restaurants and sports facilities, the presence or absence of nearby facilities or tourist spots and the like, through not limited thereto.

On the other hand, the plan information is information indicating accommodation plans (which are hereinafter also referred to simply as "plans") offered by accommodation facilities, and it is, stated differently, information related to software attributes (additional attributes) that are relatively easily changeable according to the situation. Examples of the plan information include the details of meals, the presence or absence of eating and drinking services such as all-you-can-drink, the presence or absence of extra services such as massages and beauty treatments, the availability of consecutive night stays, the availability of late check-in, the offered price, the offered period (available dates), the user evaluations on facilities and the like, through not limited thereto.

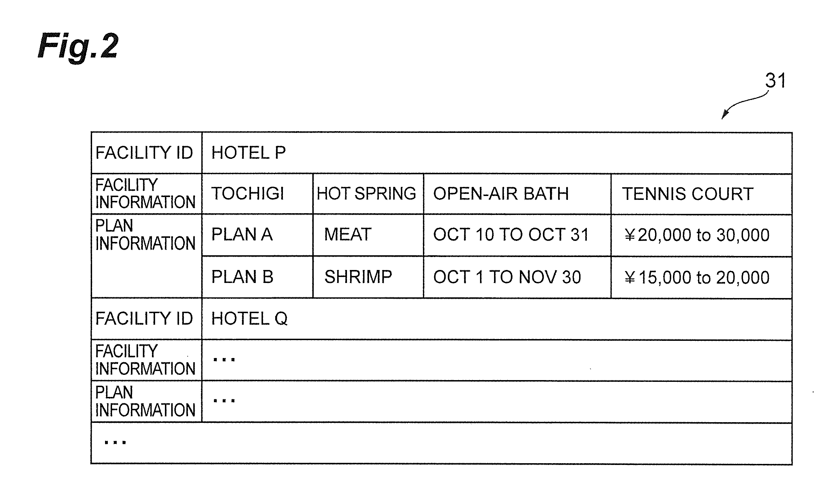

Fig. 2 shows an example of the facility information and the plan information. In the example of Fig. 2, as the facility information of "hotel P", the keyword "Tochigi" that is related to the location and the keywords "hot spring", "open-air bath" and "tennis court" that are related to the features are stored. Further, as the plan information of "hotel P", the plan information "plan A" containing the keyword "meat" related to the menu, the offered period "October 10 to October 31" and the price "20,000 to 30,000 yen" and the plan information "plan B" containing the keyword "shrimp" related to the menu, the offered period "October 1 to November 30" and the price "15,000 to 20,000 yen" are stored.

The query database 32 is a means of storing query information indicating a condition (search condition) for facility search that is made by a user on the accommodation reservation site.

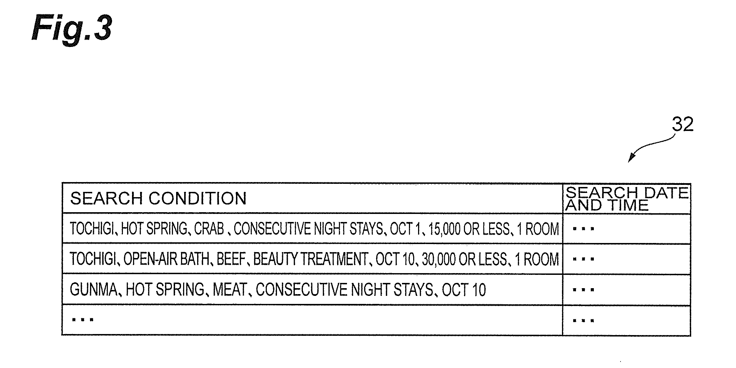

Each time a user inputs or selects a given keyword in a search condition field of the accommodation reservation site and makes a search, raw data containing a search condition consisting of one or more keywords and search date and time is stored into the query database 32. For example, the query database 32 stores the raw data as shown in Fig. 3.

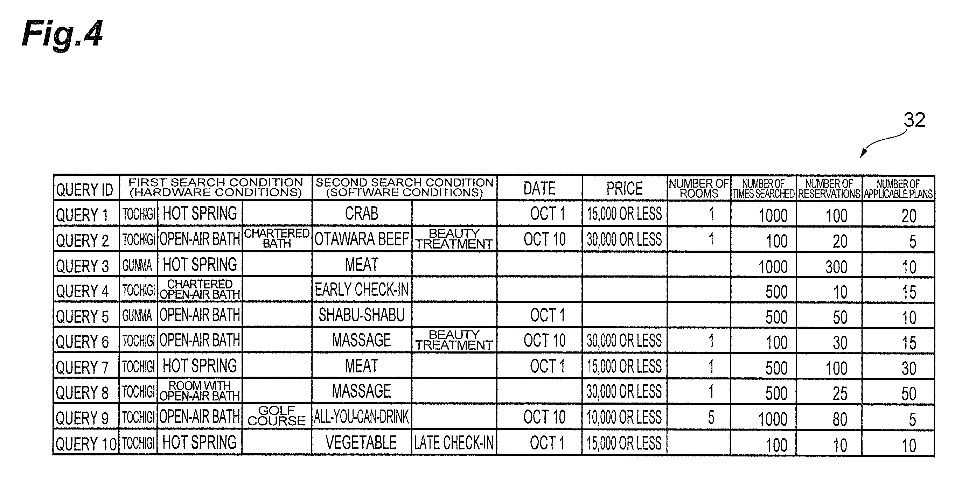

The query information that is used for processing by the information providing device 50 is generated by compiling the raw data and stored into the query database 32 in the same manner as the raw data. As shown in Fig. 4, the query information includes a query ID, a first search condition consisting of one or more keywords related to the facility information, a second search condition consisting of one or more keywords related to the plan information, a third search condition related to reservations (conditions about a schedule (date of use), a price, and the number of rooms), and compiled information for each query. In Fig. 4, the schedule and the price are treated as the third search condition based on the assumption that the offered period and the price are processed separately from the other plan information. Note that the range of price (i.e. one or more prices) may be designated as the price.

The query ID is an identifier for identifying a query, which is a combination of search keywords. The compiled information includes the number of times searched, the number of reservations, and the number of applicable plans. The number of times searched is the number of times it is used as a search condition, the number of reservations is the number of times reservations are made through the site after a search, and the number of applicable plans is the number of plans that match the search condition (the number of search hits).

The query information is compiled and updated each time the raw data is stored or just before recommendation information, which is described later, is generated.

Note that the structure of each database is not limited to the above example, and each database may be normalized or made redundant by an arbitrary policy.

The reservation management device 40 is a computer that offers various services related to accommodation reservations such as search of accommodation facilities and acceptance of accommodation reservations to users through the accommodation reservation site.

On the assumption of the above, the information providing device 50 is described. The information providing device 50 is a computer that provides recommendation information that contributes to creating accommodation plans to accommodation facilities.

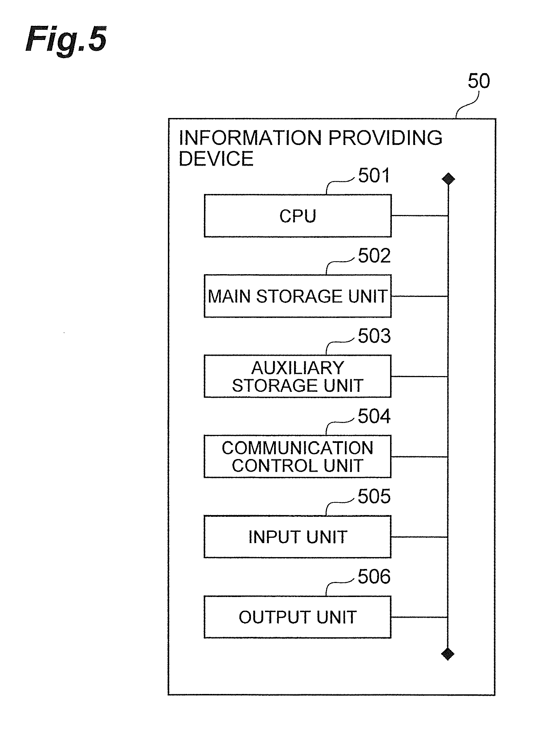

As shown in Fig. 5, the information providing device 50 is composed of a CPU 501 that executes an operating system, an application program and the like, a main storage unit 502 such as ROM and RAM, an auxiliary storage unit 503 such as a hard disk, a communication control unit 504 such as a network card, an input unit 505 such as a keyboard and a mouse, and an output unit 506 such as a display.

The functional components of the information providing device 50 described later are implemented by loading given software onto the CPU 501 or the main storage unit 502, making the communication control unit 504, the input device 505, the output device 506 and the like operate under control of the CPU 501, and performing reading and writing of data in the main storage unit 502 or the auxiliary storage unit 503. The data and database required for processing are stored in the main storage unit 502 or the auxiliary storage unit 503. Note that, although the information providing device 50 is composed of one computer in Fig. 5, the functions of the information providing device 50 may be distributed among a plurality of computers.

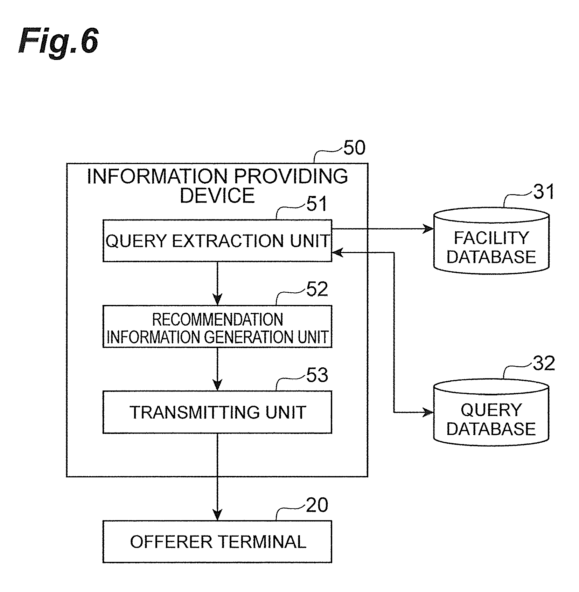

As shown in Fig. 6, the information providing device 50 includes, as functional components, a query extraction unit 51, a recommendation information generation unit 52, and a transmitting unit (presentation unit) 53.

The query extraction unit 51 is a means of extracting query information to be used for generating recommendation information. When extracting the query information related to one accommodation facility (target facility), the query extraction unit 51 extracts the facility information and the plan information of the facility from the facility database 31. The query extraction unit 51 then extracts the query information where the first search condition is included in (corresponds to) the facility information of the target facility and the second search condition is not included in (does not correspond to) the plan information of the target facility from the query database 32. The query extraction unit 51 performs such processing for each of accommodation facilities and outputs the query information extracted for each of accommodation facilities to the recommendation information generation unit 52.

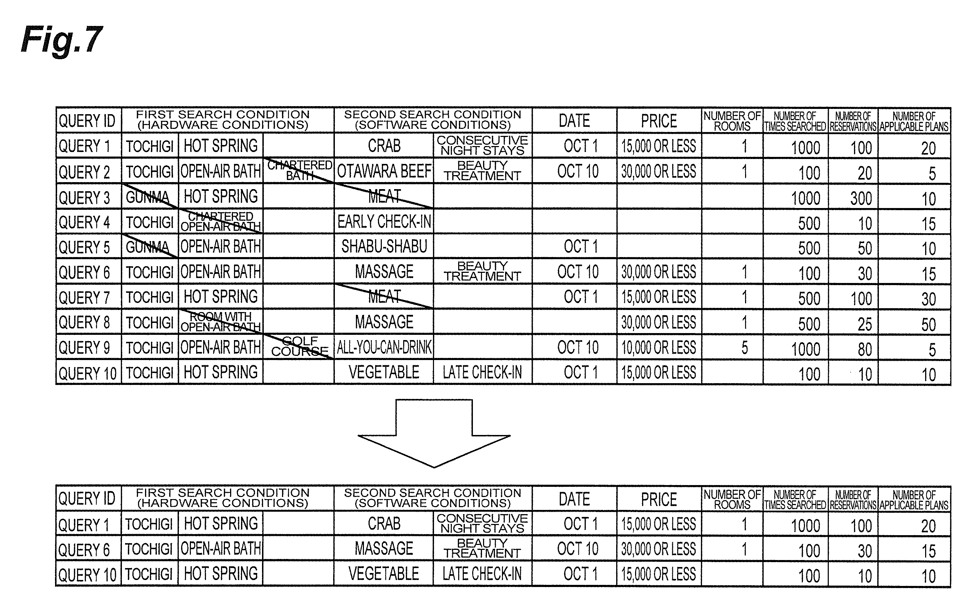

In the examples of Figs. 2 and 4, when the query extraction unit 51 extracts the query information using the facility information and the plan information of the hotel P, only the queries 1, 6 and 10 are extracted as shown in Fig. 7. The queries 2, 3, 4, 5, 8 and 9 are excluded by reason that the first search condition that is not included in the facility information of the hotel P exists, and this is because the needs of a user related to features and environment do not match the hardware attributes of the target facility. The query 7 is excluded by reason that it contains only the second search condition included in the plan information of the hotel P, and this is because the accommodation plans (software attributes) of the target facility already meet the needs of the user and it is not necessary to recommend the accommodation plans that match the search condition.

Although the offered period and the price of a plan are processed separately from the other plan information in the examples of Figs. 4 and 7, the query extraction unit 51 may use at least one of those two factors as one factor when comparing the plan information with the second search condition. In this case, the query extraction unit 51 extracts the query information where the date designated by a user is outside the range of the offered period or the query information where the price designated by a user is outside the range of the selling price of the plan. The query extraction unit 51 may narrow down the query information by using both of the offered period and the selling price.

Alternatively, the query extraction unit 51 may extract the query information where the first search condition is included in the facility information of the target facility, the second search condition is not included in the plan information of the target facility, and at least one of the date included in the offered period and the price included in the price range of the plan is designated. Alternatively, the query extraction unit 51 may extract the query information where the first search condition is included in the facility information of the target facility, the second search condition is not included in the plan information of the target facility, and the price of the plan is included in one or more prices (for example, the price range) designated by the user. In this case also, the query extraction unit 51 acquires the plan information where only the details of the accommodation plan do not meet the needs of the user.

The recommendation information generation unit 52 is a means of generating recommendation information indicating a proposal related to the plan information based on the query information input from the query extraction unit 51 and outputting the recommendation information to the transmitting unit 53. The recommendation information generation unit 52 generates and outputs the recommendation information for each of accommodation facilities.

A method of generating the recommendation information is not limited. For example, the recommendation information generation unit 52 may use the input query information as the recommendation information as it is. Further, the recommendation information generation unit 52 may generate the recommendation information that allows creation of plans for which many reservations are likely to be made by ranking or selecting the query information on the basis of the number of times searched, the number of reservations or the conversion rate (the probability that reservations are made with respect to the number of accesses). As one example, the recommendation information generation unit 52 may place the query information in descending order of the number of times searched, the number of reservations or the conversion rate and generate the recommendation information to more strongly recommend the query information placed in the higher rank. For example, in the case of ranking the queries 1, 6 and 10 shown in Fig. 7 based on the number of reservations, the recommendation information generation unit 52 generates the recommendation information that recommends the query 1 with the highest priority, and, in the case of ranking them based on the conversion rate, the recommendation information generation unit 52 generates the recommendation information that recommends the query 6 with the highest priority.

Alternatively, the recommendation information generation unit 52 may store a threshold for the number of times searched, the number of reservations or the conversion rate in advance and generate the recommendation information by using only the query information where the number of times searched, the number of reservations or the conversion rate indicated by the query information is equal to or higher than the threshold. For example, in the case where the threshold "20%" of the conversion rate is applied to the queries 1, 6 and 10 shown in Fig. 7, the recommendation information generation unit 52 generates the recommendation information based only on the query 6, and, in the case where the threshold "100" of the number of times searched is applied thereto, the recommendation information generation unit 52 generates the recommendation information based on the queries 1, 6 and 10.

Alternatively, the recommendation information generation unit 52 may generate the recommendation information that allows creation of plans which are not likely to compete with the other plans by ranking or selecting the query information based on the number of applicable plans. As one example, the recommendation information generation unit 52 may place the query information in ascending order of the number of applicable plans and generate the recommendation information to more strongly recommend the query information placed in the higher rank. For example, the recommendation information generation unit 52 generates the recommendation information that recommends the queries 1, 6 and 10 shown in Fig. 7 in order of the query 10, the query 6 and the query 1. Alternatively, the recommendation information generation unit 52 may generate the recommendation information by using only the query information where the number of applicable plans is equal to or smaller than a predetermined corresponding threshold. For example, in the case where the threshold "15" of the number of applicable plans is applied to the queries 1, 6 and 10 shown in Fig. 7, the recommendation information generation unit 52 generates the recommendation information based only on the queries 6 and 10.

A method of representing the recommendation information is not limited. As one example, the recommendation information may be represented as information of a new plan which accommodation facilities can use as it is. For example, the recommendation information generation unit 52 may generate the recommendation information "the plan α with "crab + consecutive night stays" for which needs are strong and the plan β "massage + beauty treatment" which has the high conversion rate are recommended" based on the extracted query information shown in Fig. 7. As another example, the recommendation information may be represented as statistical information to serve when accommodation facilities create a new plan. For example, the recommendation information generation unit 52 may output data in tabular form as shown in Fig. 7 as the recommendation information.

The transmitting unit 53 is a means of transmitting the input recommendation information to the offerer terminal 20 of the corresponding accommodation facility. The recommendation information is thereby presented to the accommodation facility.

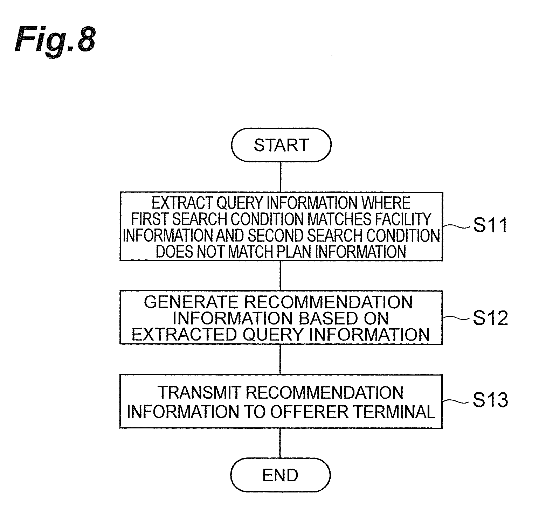

The operation of the information providing device 50 is described, and further, an information providing method according to this embodiment is described hereinafter with reference to Fig. 8.

First, the query extraction unit 51 extracts the query information where the first search condition matches the facility information of the target facility and the second search condition does not match to the plan information of the target facility from the query database 32 (Step S11, extraction step). At this time, the query extraction unit 51 may further narrow down the query information based also on the date or the price. Then, the recommendation information generation unit 52 generates the recommendation information by using any one of various techniques as described above based on the extracted query information (Step S12, generation step). After that, the transmitting unit 53 transmits the generated recommendation information to the offerer terminal 20 (Step S13, presentation step). An administrator of accommodation facilities can thereby grasp the needs of users and create accommodation plans that meet the needs.

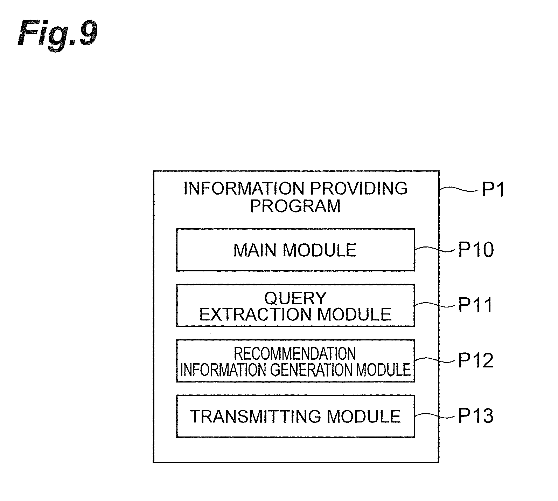

Hereinafter, an information providing program that causes a computer to function as the information providing device 50 is described with reference to Fig. 9.

An information providing program P1 includes a main module P10, a query extraction module P11, a recommendation information generation module P12, and a transmitting module P 13.

The main module P10 is a part that exercises control over the information providing functions. The functions implemented by executing the query extraction module P11, the recommendation information generation module P12 and the transmitting module P13 are equal to the functions of the query extraction unit 51, the recommendation information generation unit 52 and the transmitting unit 53 described above, respectively.

The information providing program P1 is provided in the form of being recorded in a static manner on a recording medium such as CD-ROM or DVD-ROM or semiconductor memory, for example. Further, the information providing program P1 may be provided as a computer data signal superimposed onto a carrier wave through a communication network.

As described above, according to this embodiment, the query information where facility attributes (attributes of features and environments) of a facility match a user's search condition but additional attributes (attributes of accommodation plans) of the facility do not match the search condition is extracted. This means that the query information where the features and environments meet the user's needs but the details of plans do not meet the user's needs is extracted. There is thus a possibility that the user's needs are met if only the details of accommodation plans are modified.

Therefore, by generating the recommendation information related to the facility attributes that do not match the search condition based on the query information and presenting it to the accommodation facility, the accommodation facility can understand the user's needs. Then, the accommodation facility can create an accommodation plan that meets the needs, which can effectively attract customers. Further, from the viewpoint of users, the possibility that they can find the accommodation facility and the accommodation plan that match the desired condition increases as a result that accommodation facilities review their plans.

Embodiments of the present invention are described in detail above. However, the present invention is not limited to the above-described embodiments. Various changes and modifications may be made to the present invention without departing from the scope of the invention.

Although accommodation facilities are described as facilities and accommodation plans are described as plans in the above-described embodiment, the present invention can be applied to an arbitrary reservation system other than accommodation reservations. For example, the present invention may be applied to a system that accepts reservations for golf courses (golf competition plans), and thereby the recommendation information that contributes to creating plans may be provided to golf courses.

### Reference Signs List

1 ... accommodation reservation system, 10 ... usher terminal, 20... offerer terminal, 30... databases, 31... facility database, 32... query database, 40 ... reservation management device, 50... information providing device, 51... query extraction unit, 52...recommendation information generation unit, 53... transmitting unit, P1...information providing program, P10...main module, P11... query extraction module, P12...recommendation information generation module, P13...transmitting module

## Claims

1. An information providing device capable of accessing a facility storage unit that stores attribute information indicating facility attributes and additional attributes of facilities, the device comprising:
an extraction unit that, based on query information including a first search condition corresponding to the facility attributes and a second search condition corresponding to the additional attributes used in a user's search of facilities and the attribute information, extracts the query information where the first search condition matches the facility attributes of a target facility and the second search condition does not match the additional attributes of the target facility;
a generation unit that generates recommendation information related to the additional attributes based on the query information extracted by the extraction unit; and
a presentation unit that presents the recommendation information to the target facility.

2. The information providing device according to Claim 1, wherein
the query information further includes information indicating a date of use, and
the extraction unit extracts the query information where the first search condition matches the facility attributes of a target facility, the second search condition does not match the additional attributes of the target facility, and the date of use is included in available dates of the target facility.

3. The information providing device according to Claim 1 or 2, wherein
the query information further includes information indicating one or more prices, and
the extraction unit extracts the query information where the first search condition matches the facility attributes of a target facility, the second search condition does not match the additional attributes of the target facility, and an offered price of the target facility is included in the one or more prices.

4. The information providing device according to any one of Claims 1 to 3, wherein
the query information is stored in a query storage unit accessible from the information providing device, and
the extraction unit extracts, from the query storage unit, the query information where the first search condition matches the facility attributes of a target facility, the second search condition does not match the additional attributes of the target facility, and the number of times searched corresponding to a combination of the first and second search conditions is equal to or larger than a specified threshold.

5. The information providing device according to any one of Claims 1 to 3, wherein
the query information is stored in a query storage unit accessible from the information providing device, and
the extraction unit extracts, from the query storage unit, the query information where the first search condition matches the facility attributes of a target facility, the second search condition does not match the additional attributes of the target facility, and a conversion rate corresponding to a combination of the first and second search conditions is equal to or larger than a specified threshold.

6. The information providing device according to any one of Claims 1 to 3, wherein
the query information is stored in a query storage unit accessible from the information providing device, and
the extraction unit extracts, from the query storage unit, the query information where the first search condition matches the facility attributes of a target facility, the second search condition does not match the additional attributes of the target facility, and the number of search hits corresponding to a combination of the first and second search conditions is equal to or smaller than a specified threshold.

7. The information providing device according to any one of Claims 1 to 6, wherein
the facility attributes are attributes related to features or environments of facilities, and the additional attributes are attributes related to plans of facilities.

8. An information providing method executed by an information providing device capable of accessing a facility storage unit that stores attribute information indicating facility attributes and additional attributes of facilities, the method comprising:
an extraction step of, based on query information including a first search condition corresponding to the facility attributes and a second search condition corresponding to the additional attributes used in a user's search of facilities and the attribute information, extracting the query information where the first search condition matches the facility attributes of a target facility and the second search condition does not match the additional attributes of the target facility;
a generation step of generating recommendation information related to the additional attributes based on the query information extracted in the extraction step; and
a presentation step of presenting the recommendation information to the target facility.

9. An information providing program causing a computer to function as an information providing device capable of accessing a facility storage unit that stores attribute information indicating facility attributes and additional attributes of facilities, the program causing the computer to implement:
an extraction unit that, based on query information including a first search condition corresponding to the facility attributes and a second search condition corresponding to the additional attributes used in a user's search of facilities and the attribute information, extracts the query information where the first search condition matches the facility attributes of a target facility and the second search condition does not match the additional attributes of the target facility;
a generation unit that generates recommendation information related to the additional attributes based on the query information extracted by the extraction unit; and
a presentation unit that presents the recommendation information to the target facility.

10. A computer-readable recording medium storing an information providing program causing a computer to function as an information providing device capable of accessing a facility storage unit that stores attribute information indicating facility attributes and additional attributes of facilities, the information providing program causing the computer to implement:
an extraction unit that, based on query information including a first search condition corresponding to the facility attributes and a second search condition corresponding to the additional attributes used in a user's search of facilities and the attribute information, extracts the query information where the first search condition matches the facility attributes of a target facility and the second search condition does not match the additional attributes of the target facility;
a generation unit that generates recommendation information related to the additional attributes based on the query information extracted by the extraction unit; and
a presentation unit that presents the recommendation information to the target facility.
